# FASCICULE DE BREVET EUROPEEN

(11) **EP 0 618 335 B1**
(45) Date de publication et mention de la délivrance du brevet: **11.10.2000**
(21) Numéro de dépôt: 94400663.4
(22) Date de dépôt: 29.03.1994
(51) Int. Cl.: E04C 2/52, E04B 1/76

(54) **Elément de paroi à isolation dynamique pour le renouvellement d'air dans des bâtiments en vue de les rendre plus confortables et plus économiques**
Wandelement mit dynamischer Isolation für die Belüftung von Gebaüden im Hinblick sie komfortabler und wirtschaftlicher zu machen
Wall element with dynamic insulation for the ventilation of buildings in view of making them more comfortable and economic

(30) Priorité: 30.03.1993 FR 9303644
(43) Date de publication de la demande: 05.10.1994
(73) Titulaire: THERMOPHONIE S.A., F-75013 Paris (FR); Clement, Pierre, 75013 Paris (FR)
(72) Inventeur: Clement Pierre, 75013 PARIS (FR); Clement Bruno, 75013 PARIS (FR); Clement Christelle, 75018 PARIS (FR); Clement Martine, 75013 PARIS (FR); Clement Sabine, 75013 PARIS (FR)
(74) Mandataire: Pinguet, André

(56) Documents cités:
- DE-A- 3 441 597
- DE-C- 4 042 208
- FR-A- 2 264 934
- FR-A- 2 473 161
- FR-A- 2 549 877
- FR-A- 2 584 976
- FR-A- 2 597 903
- FR-A- 2 675 182

## Description

La présente invention concerne un élément de paroi à isolation dynamique pour le renouvellement d'air dans des bâtiments en vue de les rendre plus confortables et plus économiques.

Le présent inventeur a déjà inventé un élément de paroi isolant ayant la forme d'une plaque de revêtement de sol ou de plafond, divulguée dans le document FR-A-2 637 887. Cet élément de paroi comporte une couche en matériau isolant ayant des reliefs sur une face, et une couche de parement qui recouvre la couche de matériau isolant. Les reliefs dégagent des passages dans lesquels on peut faire circuler un fluide de chauffage, de rafraîchissement, de séchage, d'humidification des locaux, ou des canalisations de gaz, d'eau, d'électricité, etc.. Cet élément de paroi a un effet d'isolation non seulement thermique, mais aussi acoustique.

La présente invention prévoit de préférence deux lames de circulation d'air, de part et d'autre de la couche isolante. Cette mise en oeuvre permet d'utiliser au maximum l'effet d'inertie thermique du plancher ou du plafond, qui amortit les variations thermiques brusques de l'air extérieur, et ainsi améliore le confort thermique du bâtiment. Cet effet régulateur thermique permet de diminuer considérablement les besoins énergétiques en stockant l'énergie solaire ainsi que de réguler les apports énergétiques en rendant par exemple de jour la fraîcheur emmagasinée la nuit. De plus, cet effet empêche toute condensation et assure donc un mur toujours sec.

D'autre part, lorsque les passages dégagés entre les reliefs de la couche isolante sont utilisés pour faire circuler de l'air neuf pour le renouvellement d'air de locaux d'habitation ou de locaux professionnels, les éléments de paroi de l'art antérieur présentent toutefois l'inconvénient que l'air dans les locaux est souvent exagérément sec en période de chauffage. Cet inconvénient n'est d'ailleurs pas spécifique de ces éléments de paroi, mais se rencontre dans tous les systèmes modernes de renouvellement d'air. La solution habituelle à ce problème est d'utiliser des appareils d'humidification de l'air, ce qui est coûteux.

Selon l'invention, ce problème est résolu par un élément de paroi destiné à être mis en oeuvre dans un bâtiment, constitué par une plaque composite ayant au moins une couche en matériau isolant thermique dotée d'entretoises sur au moins une de ses faces, les entretoises définissant le passage d'air dans au moins deux directions parallèles à la plaque pour faire entrer de l'air dans le bâtiment, caractérisé en ce que la plaque composite comporte en outre au moins une couche de plâtre ou d'un autre matériau résistant et hydrophile disposée contre les entretoises de la couche de matériau isolant thermique, ledit matériau hydrophile formant un réservoir d'humidité, qui se charge en humidité pendant les périodes humides, et qui restitue cette humidité lorsque l'air entrant est sec. La couche de matériau résistant hydrophile participe en outre à la résistance d'ensemble de l'élément de paroi, et elle protège les reliefs de la couche en matériau isolant. De plus, la couche de matériau résistant hydrophile permet un accrochage facile de divers éléments sur l'élément de paroi (câbles, tuyaux lorsque l'élement de paroi est employé en plancher, parements, vêtures, pierres de taille ou éventuellement câbles et tuyaux lorsque l'élément de paroi est employé verticalement en extérieur ou en intérieur, etc.), par exemple par clouage, vissage, collage, etc..

Bien entendu, I'élément de paroi selon l'invention conserve les caractéristiques d'isolation thermique et phonique déjà connues du document FR-A-2 367 887. En outre, la couche de matériau résistant hydrophile augmente l'inertie thermique de la plaque composite, ce qui permet d'amortir les variations thermiques de l'air extérieur.

Une fixation par clouage ou similaire est bien sûr envisageable sans condition particulière sur la couche de matériau résistant hydrophile. Toutefois, lorsque la couche de matériau résistant hydrophile est pleine, ce clouage entraîne une légère perte de temps lors de la réalisation de la paroi, et le clouage, s'il est fait sans soin, peut éventuellement entraîner des endommagements locaux de la couche de matériau résistant hydrophile. Afin de remédier à ces inconvénients, la couche de matériau résistant hydrophile peut être percée de trous tous identiques. Il est ainsi possible de fixer des éléments divers sur la couche de matériau résistant hydrophile au moyen de chevilles, qui sont plus faciles et plus rapides à enfoncer que des clous. Les trous peuvent être borgnes et ouverts sur la face de la couche de matériau résistant hydrophile qui est opposée à la couche de matériau isolant thermique, ce qui évite l'entrée de débris dans le passage d'air de la plaque.

Afin d'améliorer l'isolation acoustique, la plaque composite peut éventuellement comporter une couche de matériau résilient d'isolation acoustique. Cette couche peut être une couche supplémentaire ou bien elle peut être éventuellement incluse dans ou constituée par la couche d'isolant thermique susmentionnée.

L'invention a aussi pour objet un plancher de bâtiment comportant une paroi de support sensiblement horizontale, des éléments de paroi tels que définis précédemment, posés sur la paroi de support avec leur couche de matériau résistant hydrophile, ou une de leurs couches de matériau résistant hydrophile, dirigée vers le haut, les passages d'air des différents éléments de paroi communiquant ensemble horizontalement et étant reliés à une entrée d'air venant de l'extérieur et à une sortie d'air vers l'intérieur du bâtiment, des moyens de chauffage étant disposés sur la couche de matériau résistant hydrophile dirigée vers le haut et recouverts par une couche de parement. L'air circulant dans le passage d'air défini par les reliefs de la couche isolante est ainsi rechauffé par le chauffage de sol, avant d'entrer dans les pièces du bâtiment, ce qui améliore le confort thermique et limite les déperditions thermiques. Selon une forme de réalisation, la couche de parement est une chape de béton ou autolissante formée au-dessus de la couche de matériau résistant hydrophile, un film étanche disposé entre la chape et la couche de matériau résistant hydrophile pour éviter tout contact entre la couche de matériau résistant hydrophile et la chape, et les moyens de chauffage sont noyés dans la chape. Selon une autre forme de réalisation, la couche de parement est une chape sèche, les moyens de chauffage étant noyés dans un lit de sable et la chape sèche étant posée sur le lit de sable.

L'invention a aussi pour objet une façade de bâtiment comportant une paroi de support sensiblement verticale, des éléments de paroi tels que définis précédemment, fixés à la paroi de support, avec leur couche de matériau résistant hydrophile ou une de leurs couches de matériau résistant hydrophile dirigée vers l'extérieur du bâtiment et une couche de parement pour isoler la couche de matériau résistant hydrophile des intempéries, les passages d'air des différents éléments de paroi communiquant ensemble et étant reliés à une entrée d'air communiquant avec l'atmosphère extérieure et à une sortie d'air vers l'intérieur du bâtiment. Avantageusement, ladite paroi de support est disposée pour être exposée au soleil pendant au moins une partie de la journée. L'air circulant dans le passage d'air des plaques composites peut ainsi être réchauffé en hiver par l'échauffement du parement extérieur sous l'effet du rayonnement solaire. Eventuellement, en été, l'air entrant dans le bâtiment pourra être prélévé au moins à certains moments et/ou dans une certaine proportion sur la face nord du bâtiment, ce qui permet d'obtenir un air plus frais.

L'invention a aussi pour objet un système de renouvellement d'air d'un bâtiment, comportant un plancher et un plafond dotés chacun d'éléments de paroi tels que définis précédemment, dans lequel les éléments de paroi du plafond comportent des passages d'air qui communiquent ensemble horizontalement et sont reliés à une entrée d'air venant de l'extérieur du bâtiment, les éléments de paroi du plancher comportent des passages d'air qui communiquent ensemble horizontalement et communiquent d'une part avec les passages d'air des éléments de paroi du plafond, et d'autre part avec une sortie d'air vers l'intérieur du bâtiment. Ainsi, en hiver, l'air entrant se réchauffe aussi dans le plafond avant d'entrer dans la pièce, ce qui contribue en outre à diminuer l'écart de température entre le plancher et le plafond. Des moyens peuvent aussi être prévus pour que l'air entrant ne passe pas dans le plafond en été, et éventuellement pour que l'air entrant en été provienne au moins partiellement et/ou au moins une partie de la journée d'une entrée d'air auxiliaire qui communique directement avec l'atmosphère, de préférence au nord.

Selon une autre forme de réalisation, le système de renouvellement d'air de l'invention comporte en outre une pompe à chaleur pour extraire de la chaleur de l'air sortant du bâtiment, la pompe à chaleur recevant l'air entrant dans le bâtiment par les passages d'air des éléments de paroi, le système de renouvellement comportant en outre des moyens pour sélectivement soit chauffer l'air entrant dans le bâtiment au moyen de la pompe à chaleur, soit refroidir l'air entrant dans le bâtiment au moyen de la pompe à chaleur, soit ne pas agir sur l'air entrant dans le bâtiment au moyen de la pompe à chaleur.

Avantageusement, la pompe à chaleur est en outre utilisée pour chauffer de l'eau d'un chauffe-eau du circuit d'eau chaude sanitaire.

L'invention a aussi pour objet un système de renouvellement d'air d'un bâtiment comportant au moins un plancher ou un plafond qui présente des éléments de paroi tels que définis précédemment, et comportant en outre une soufflante pour injecter dans les passages d'air, de l'air prélevé à l'extérieur du bâtiment. Eventuellement, la soufflante est couplée à des moyens de traitement de l'air, par exemple pour désinfecter ou odoriser l'air, éliminer les insectes, etc.. La soufflante peut aussi injecter de l'air à température atmosphérique ambiante, au moins à certaines époques pendant au moins une partie de la journée.

D'autres caractéristiques et avantages de l'invention apparaîtront au cours de la description détaillée suivante de plusieurs formes de réalisation de l'invention, donnéee à titre d'exemple non limitatif en regard des desisns joints.

Sur les dessins :
- la figure 1 est une vue en perpective d'un élément de paroi isolant selon l'invention,
- la figure 2 est une vue partielle en coupe transversale de l'élément de paroi de la figure 1,
- la figure 3 est une vue écorchée qui illustre la mise en oeuvre de l'élément de la paroi de la figure 1 sur un plancher,
- la figure 4 est une vue de détail de la figure 3,
- la figure 5 illustre un mode de mise en oeuvre de l'élément de paroi de la figure 1, à la fois sur un plancher et à l'intérieur des murs d'un bâtiment,
- la figure 6 illustre un mode de mise en oeuvre de l'élément de paroi de la figure 1, à la fois sur un plancher et à l'extérieur des murs d'un bâtiment,
- la figure 7 représente une façon possible pour traverser un mur porteur dans un bâtiment, de façon à faire circuler de l'air dans les éléments de paroi, selon l'invention, disposés sur le plancher,
- la figure 8 est une vue de détail de la figure 7,
- la figure 9 illustre un mode possible d'entrée et de sortie d'air dans les éléments de paroi de la figure 1, disposés sur un plancher,
- la figure 10 est une vue de détail de la figure 9,
- la figure 11 illustre un premier mode de fonctionnement d'un système de renouvellement d'air selon l'invention, et
- la figure 12 illustre un deuxième mode de fonctionnement d'un système de renouvellement d'air selon l'invention.

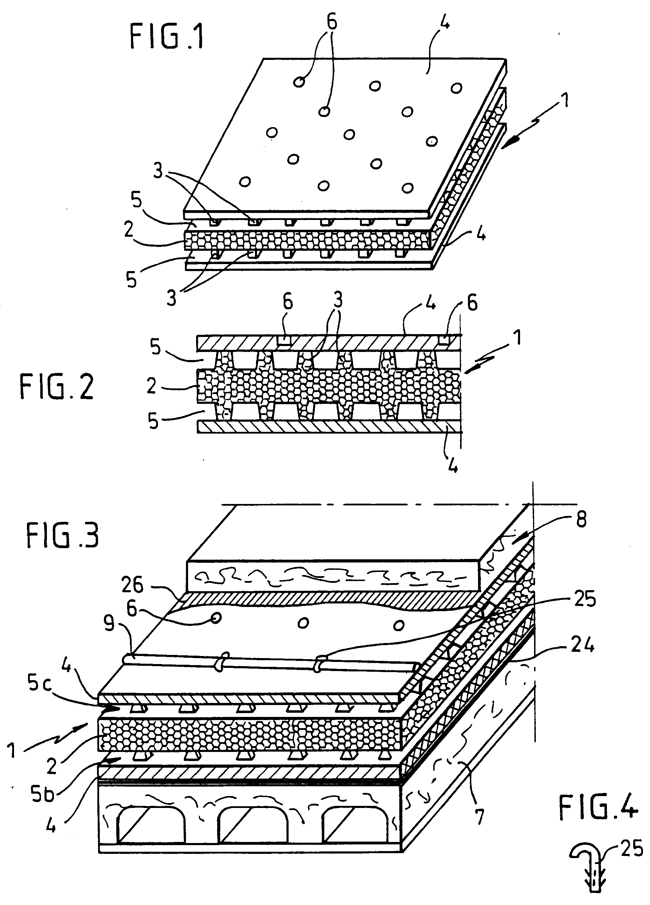

Les figures 1 et 2 représentent un élément de paroi isolant selon l'invention. L'élément de paroi est constitué par une plaque composite 1, qui comporte une couche centrale 2 constituée d'un matériau isolant thermique, disposé entre deux couches de matériau hydrophile de type plâtre 4. Sur l'une ou les deux faces de la couche centrale 2 peut être disposée une série d'entretoises 3, qui définit un passage d'air 5 dans lequel de l'air peut s'écouler dans au moins deux directions parallèlement à la plaque composite 1. Les entretoises 3 sont de préférence des reliefs de la plaque centrale 2, qui sont formées d'une seule pièce avec ladite pièce centrale 2. La ou les plaques de plâtre sont de préférence collées au relief 3, mais peuvent être fixées audits reliefs par tout autre moyen. Dans une forme particulière de réalisation, la couche centrale 2 a une épaisseur d'environ 40 mm, et les passages d'air ont une épaisseur d'environ 20 mm chacun. Avantageusement, au moins une des couches de plâtres 4 comporte des trous 6 ouverts vers l'extérieur de la plaque composite 1, dont l'utilité sera vue plus loin. Avantageusement, comme on peut le voir sur la figure 2, les trous 6 sont borgnes, de sorte qu'ils ne communiquent pas avec les passages d'air 5, ce qui évite de faire entrer des impuretés dans les passages d'air 5. Les reliefs 3 peuvent avoir toute forme, bien que des reliefs carrés ou rectangulaires disposés dans l'alignement les uns des autres soient préférés. La plaque composite 1 est de préférence préfabriquée en usine, avec des dimensions standard. On notera que la plaque composite 1 pourrait éventuellement comporter une seule plaque de plâtre 4, et éventuellement la couche centrale isolante 2 pourrait ne comporter des reliefs 3 que du côté de la plaque de plâtre.

La figure 3 illustre un mode de mise en oeuvre de l'élément de paroi des figures 1 et 2, sur un plancher. Le plancher comporte une dalle horizontale 7, ou toute autre paroi de support. La surface supérieure de la dalle 7 doit être de préférence lisse. Si la surface supérieure de la dalle 7 n'est pas lisse, elle peut être meulée, ou encore on peut disposer au-dessus de la dalle 7 un lit de sable 24 tiré à la règle. Eventuellement, on peut aussi disposer sur la dalle 7 un matériau résilient d'isolation acoustique. Il est aussi possible d'incorporer un matériau résilient d'isolation acoustique dans la plaque composite 1, et on notera aussi que, même sans incorporer une couche supplémentaire de matériau résilient d'isolation acoustique, la plaque composite telle que représentée sur les figures 1 et 2 permet d'obtenir une bonne isolation acoustique, notamment grâce aux reliefs 3 qui transmettent mal les bruits d'impact, et qui constituent aussi des pièges à son. En outre, la couche centrale 2 de la plaque composite 1 peut avoir aussi une certaine élasticité qui favorise l'amortissement des bruits d'impact.

On pose des plaques composites 1 juxtaposées sur la dalle 7, puis on dispose si nécessaire au-dessus des plaques composites 1 des canalisations, fourreaux de câbles électiques, ou câbles de chauffage 9. Avantageusement, des canalisations ou câbles sont fixés sur la plaque composite 1, éventuellement par clouage ou similaire sur la couche de plâtre 4 supérieure, et de préférence par insertion de chevilles 25 en forme de crochets (voir figure 4) dans les trous borgnes 6 déjà décrits. Au-dessus des plaques composites 1 et des canalisations et câbles 9 éventuels, on dispose un film 26 étanche, par exemple un film polyane, puis on coule au-dessus du film 28 une chape de béton 8 ou éventuellement une chape d'un autre matériau (par exemple une chape sèche, auquel cas les câbles et canalisations sont de préférence noyés dans un lit de sable entre la chape sèche et les plaques composites).

Comme décrit précédemment, les passages d'air 5 des différents plaques composites 1 communiquent ensemble horizontalement pour former deux passages d'air 5b et 5c horizontaux. Les passages d'air horizontaux 5b et/ou 5c communiquent d'une part avec une entrée d'air (non représentée) qui amène de l'air provenant de l'extérieur du bâtiment, et d'autre part avec une sortie d'air vers l'intérieur des pièces du bâtiment. Comme déjà décrit, les couches de plâtre 4 servent de régulateur du taux d'humidité de l'air. En outre, la circulation d'air permet de récupérer une grande partie des calories qui sont transmises par le câble chauffant 9 à la plaque de plâtre supérieure 4, ce qui représente une économie d'énergie et une amélioration de confort substantielles. Par ailleurs, l'inertie thermique importante de la dalle 7 ainsi qu'éventuellement l'inertie thermique des plaques composites 1, est mise à profit pour amortir les variations brusques de la température de l'air extérieur. Ainsi, en été, il est possible d'obtenir un certain rafraichissement de l'air entrant dans le bâtiment. Eventuellement, il pourrait être possible de fixer sur la couche de plâtre supérieure 4 des canalisations de refroidissement en plus des câbles chauffants 9.

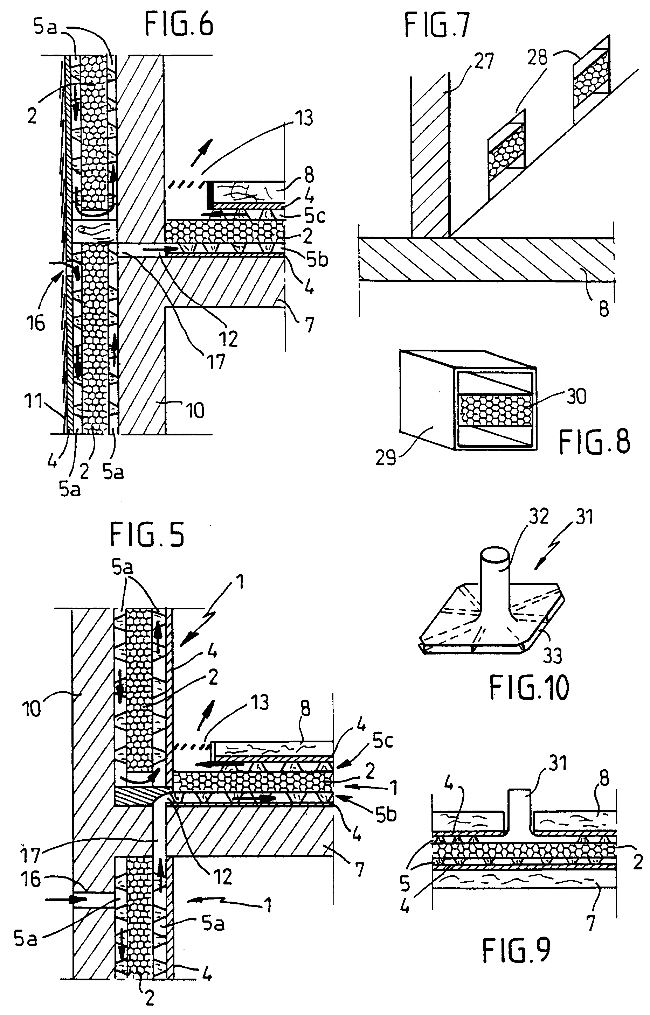

Comme représenté sur la figure 5, des éléments de paroi selon l'invention peuvent aussi être disposés verticalement, à l'intérieur des murs de façade d'un bâtiment. Dans l'exemple représenté, les plaques composites 1 comportent une seule couche de plâtre dirigée vers l'intérieur du bâtiment, aussi les plaques composites 1 pourraient aussi bien comporter deux couches de plâtre 4. L'air entrant dans le bâtiment circule dans le passages d'air 5a des plaques composites 1 verticales. Lorsque le mur 10 de façade est exposé au soleil, on obtient ainsi un certain réchauffement grâce à l'énergie solaire récupérée par le mur 10 en plus de l'effet d'inertie thermique du mur 10. Dans l'exemple représenté sur la figure 5, le mur 10 comporte des ouvertures 16 qui communiquent avec l'atmosphère et les passages d'air 5a des plaques composites verticales communiquent d'une part avec les ouvertures 16 d'entrée d'air, et d'autre part avec des sorties d'air 17 vers l'intérieur du bâtiment. Les sorties d'air 17 des passages d'air 5a des plaques composites verticales communiquent en outre avec des entrées d'air 12 des passages d'air 5b inférieurs de plaques composites 1 horizontales au-dessus de la dalle de plafond de l'étage concerné. Les passages d'air 5b du plafond communiquent avec les passages d'air 5c supérieurs de plaques composites 1 disposés sur la dalle de plancher de l'étage concerné, et les passages d'air 5c communiquent avec des grilles 13 du plancher qui permettent à l'air d'entrer dans les pièces. Le passage de l'air entrant dans le plafond des pièces permet de récupérer une partie de la chaleur de l'air situé en partie supérieure des pièces, qui est le plus chaud, et permet aussi de limiter le gradient thermique vertical à l'intérieur des pièces, ce qui améliore le confort thermique.

Comme représenté sur la figure 6, les plaques composites 1 peuvent éventuellement être disposées à l'extérieur du mur de façade 10 du bâtiment, la couche de plâtre 4 disposée à l'extérieur du bâtiment étant recouverte d'un parement 11 (ardoises, pierre de taille ou toute autre vêture) qui isole la couche de plâtre 4 des intempéries. Le parement 11 peut être aisément fixé à la couche de plâtre 4 extérieure, par exemple par clouage ou par insertion de chevilles dans les trous 6 de la couche de plâtre comme il a été vu précédemment. Dans cet exemple, l'ouverture d'entrée d'air 16 est formée dans la couche de plâtre 4 extérieure.

Dans les exemples des figures 5 et 6, les plaques composites 1 peuvent être rapportées sur le mur 10 après réalisation dudit mur 10, ou encore lorsque le mur 10 est en béton, les plaques composites 1 peuvent être mises en place à l'intérieur d'une banche lors du coulage du béton pour être ainsi solidarisées du mur 10.

Lorsque les plaques composites 1 selon l'invention sont employées sur un plancher, il est possible de faire communiquer les passages d'air 5 des plaques 1 disposées de part et d'autre d'un mur porteur 27, comme représenté sur les figures 7 et 8, au moyen de réservations 28 laissées dans le mur porteur 27, complétées de préférence par une gaine intérieure 29 comportant une couche isolante 30 horizontale d'épaisseur et de position correspondant respectivement à l'épaisseur et la position de couches isolantes 2 des plaques composites 1 disposées sur le plancher.

Comme représenté sur les figures 9 et 10, les entrées et sorties d'air du plancher peuvent être constituées par des pièces 31 comportant une canalisation verticale 32 qui saille au-dessus du plancher, et qui communique avec les canaux de diffusion horizontaux 33, disposés dans un des passages d'air 5 des plaques composites 1.

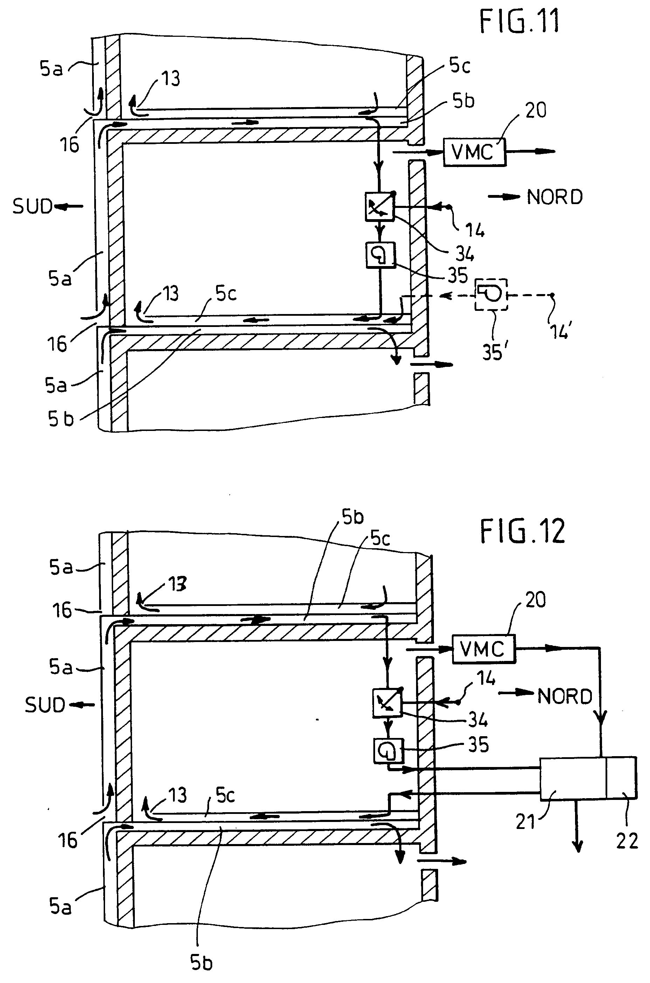

Comme représenté schématiquement sur la figure 11, un bâtiment peut être équipé d'un système de ventilation comportant pour chaque étage une entrée d'air 16 à l'extérieur du bâtiment, communiquant avec les passages d'air de plaques composites 1 disposées verticalement à l'extérieur du bâtiment, comme représenté par exemple sur la figure 6, sur une façade du bâtiment exposée au soleil, lesdits passages d'air 5a des plaques composites verticales communiquant en outre avec des passages d'air 5b de plaques horizontales disposées au-dessus de la dalle de plafond de l'étage concerné, lesdits passages d'air 5b des plaques composites disposées sur la dalle du plafond communiquant elles-même avec des passages d'air 5c de plaques composites 1 disposées sur la dalle de plancher de l'étage concerné, et ces derniers passages 5c communiquant avec une sortie d'air 13 vers les pièces du bâtiment. Comme représenté sur la figure 11, le système de renouvellement d'air comporte avantageusement une entrée d'air auxiliaire 14, qui communique directement vers l'atmosphère extérieure, et qui est disposée de préférence sur une façade du bâtiment qui n'est pas exposée au soleil. Le système de renouvellement d'air comporte en outre une vanne 34 à deux positions, une première position dans laquelle l'entrée d'air auxiliaire 14 communique directement avec les passages 5c des plaques composites 1 disposées sur le plancher du bâtiment, et dans laquelle lesdits passages d'air 5c des plaques composites du plancher du bâtiment sont isolés des passages d'air 5b des plaques composites disposés sur la dalle du plafond, et une deuxième position dans laquelle les passages d'air du plancher du bâtiment communiquent avec les passages d'air du plafond 5b, mais pas avec l'entrée d'air auxiliaire 14. La première position est employée en été, tandis que la deuxième position est employée en hiver. La circulation d'air dans le bâtiment se fait en général au moyen d'une ventilation mécanique contrôlée 20, qui extrait de l'air de certaines pièces du bâtiment. Eventuellement, la ventilation mécanique contrôlée peut être remplacée et/ou aidée par une soufflante 35 disposée dans le circuit d'arrivée d'air.

Une soufflante 35' peut éventuellement être raccordée à une entrée d'air 14' auxiliaire pour envoyer de l'air neuf directement dans les passages d'air 5c du plancher, comme représenté en pointillés sur la figure 11. Dans ce cas, la vanne 34, la soufflante 35 et l'entrée d'air 14 peuvent être omises. La soufflante 35' permet de réguler à volonté le débit d'air entrant dans le bâtiment, et éventuellement de souffler de l'air en sens inverse dans les passages d'air 5b du plafond et les passages d'air 5a en façade, pour le refroidir.

Les soufflantes 35 ou 35' peuvent être associées à des moyens de traitement d'air (odorisation, désinfectation, élimination des insectes, etc.).

Comme représenté sur la figure 12, ce dispositif peut être complété par une pompe à chaleur 21, qui récupère la chaleur de l'air extrait par la ventilation mécanique contrôlée 20. Avantageusement, la pompe à chaleur 21 sert à réchauffer l'eau d'un chauffe-eau 22, et elle refroidit simultanément l'air envoyé vers l'extérieur du bâtiment par la ventilation mécanique contrôlée. Avantageusement, on fait circuler dans la pompe à chaleur 21 l'air entrant dans le bâtiment, et la pompe à chaleur est adaptée sélectivement soit à refroidir l'air entrant (en été), soit à le réchauffer (en hiver), soit à n'avoir aucune influence thermique sur l'air entrant (en demi-saison).

## Revendications

1. Elément de paroi destiné à être mis en oeuvre dans un bâtiment, constitué par une plaque composite (1) ayant au moins une couche (2) en matériau isolant thermique dotée d'entretoises (3) sur au moins une de ses faces, les entretoises (3) définissant un passage d'air (5) dans au moins deux directions parallèles à la plaque (1) pour faire enter de l'air dans le bâtiment, caractérisé en ce que la plaque composite (1) comporte en outre au moins une couche de matériau résistant hydrophile (4) disposée contre les entretoises (3) de la couche de matériau isolant thermique, ledit matériau hydrophile (4) formant un réservoir d'humidité qui se charge en humidité pendant les périodes humides et qui restitue cette humidité lorsque l'air entrant est sec.

2. Elément de paroi selon la revendication 1, dans lequel le matériau résistant hydrophile est du plâtre.

3. Elément de paroi selon la revendication 1 ou la revendication 2, dans lequel la couche (1) de matériau résistant hydrophile est percée de tous (6) tous identiques.

4. Elément de paroi selon la revendication 3, dans lequel les trous (6) sont borgnes et ouverts sur la face de la couche (1) de matériau résistant hydrophile (4) qui est opposée à la couche de matériau isolant thermique (2).

5. Elément de paroi selon l'une quelconque des revendications précédentes, dans lequel la plaque composite (1) comporte une couche de matériau résilient d'isolation acoustique.

6. Plancher de bâtiment comportant une paroi de support (7) sensiblement horizontale, des éléments de paroi selon une des revendications 1 à 5, posés sur la paroi de support (7) avec leur couche (1) de matériau résistant hydrophile (4), ou une de leurs couches (1) de matériau résistant hydrophile (4) dirigée vers le haut, les passages d'air (5) des différents éléments de paroi communiquant ensemble horizontalement et étant reliés à une entrée d'air (12) venant de l'extérieur et à une sortie d'air (13) vers l'intérieur du bâtiment, des moyens de chauffage (9) étant disposés sur la couche de matériau résistant hydrophile (4) dirigée vers le haut et recouvertes par une couche de parement (8).

7. Plancher selon la revendication 6, dans lequel la couche de parement est une chape (8) de béton ou autolissante formée au-dessus de la couche (1) de matériau résistant hydrophile (4), un film étanche disposé entre la chape (8) et la couche de matériau résistant hydrophile (4) pour éviter tout contact entre la couche (1) de matériau résistant hydrophile (4) et la chape (8), et les moyens de chauffage (9) sont noyés dans la chape (8).

8. Plancher selon la revendication 6, dans lequel la couche de parement est une chape sèche, les moyens de chauffage (9) étant noyés dans un lit de sable et la chape sèche étant posée sur le lit de sable.

9. Façade de bâtiment comportant une paroi de support (10) sensiblement verticale, des éléments de paroi selon une des revendications 1 à 5, fixés à la paroi de support (10), avec leur couche de matériau résistant hydrophile (4) ou une de leurs couches de matériau résistant hydrophile (4) dirigée vers l'extérieur du bâtiment et une couche de parement (11) pour isoler la couche de matériau résistant hydrophile (4) des intempéries, les passages d'air (5) des différents éléments de paroi étant reliés à une entrée d'air (16) communiquant avec l'atmosphère extérieure et à une sortie d'air (13) vers l'intérieur du bâtiment.

10. Façade selon la revendication 9, dans laquelle ladite paroi de support est disposée pour être exposée au soleil pendant au moins une partie de la journée

11. Système de renouvellement d'air comportant une façade selon la revendication 10, une entrée d'air auxiliaire (14) pour faire entrer de l'air à température ambiante atmosphérique, ladite entrée d'air auxiliaire communiquant directement avec l'amosphère extérieure, le système de renouvellement d'air comportant en outre des moyens (15) pour sélectivement faire communiquer ladite sortie d'air (13) soit avec les passages d'air (5a) des éléments de parois de ladite façade exposée au soleil, soit avec l'entrée d'air auxilaire (14).

12. Système de renouvellement d'air d'un bâtiment, comportant au moins un plancher et un plafond dotés chacun d'éléments de paroi selon une des revendications 1 à 5, dans lequel les éléments de paroi du plafond comportant des passages d'air (5b) qui communiquent ensemble horizontalement et sont reliés à une entrée d'air (16) qui communique avec l'extérieur du bâtiment, les éléments de paroi du plancher comportant des passages d'air (5c) qui communiquent ensemble horizontalement et communiquent d'une part avec les passages d'air (5b) des éléments de paroi du plafond, et d'autre part avec une sortie d'air (13) vers l'intérieur du bâtiment.

13. Système de renouvellement d'air selon la revendication 12, comportant une façade selon la revendication 10 dont les passages d'air (5a) communiquent avec des passages d'air (5b) des éléments de paroi du plafond, une entrée d'air auxiliaire (14) pour faire entrer de l'air à température ambiante atmosphérique, et comportant en outre des moyens (34) pour sélectivement connecter les passages d'air (5c) des éléments de paroi du plancher soit à l'entrée d'air auxiliaire (14), soit aux passages d'air (5b) des éléments de paroi du plafond.

14. Système de renouvellement d'air d'un bâtiment comportant au moins un plancher ou un plafond qui présente des éléments de paroi selon une des revendications 1 à 5, comportant en outre une pompe à chaleur (21) pour extraire de la chaleur de l'air sortant du bâtiment, la pompe à chaleur (21) recevant l'air entrant dans le bâtiment par les passages d'air (5) des éléments de paroi, le système de renouvellement d'air (21) comportant en outre des moyens pour sélectivement soit chauffer l'air entrant dans le bâtiment au moyen de la pompe à chaleur, soit refroidir l'air entrant dans le bâtiment au moyen de la pompe à chaleur, soit ne pas agir sur l'air entrant dans le bâtiment au moyen de la pompe à chaleur.

15. Système de renouvellement d'air selon la revendication 14, dans lequel la pompe à chaleur (21) est en outre utilisée pour chauffer de l'eau d'un chauffe-eau (22).

16. Système de renouvellement d'air d'un bâtiment comportant au moins un plancher ou un plafond qui présente des éléments de paroi selon une des revendications 1 à 5, et comportant en outre une soufflante (35, 35') pour injecter dans les passages d'air (5) de l'air prélevé à l'extérieur du bâtiment.

17. Système de renouvellement d'air selon la revendication 16, dans lequel la soufflante (35, 35') est couplée à des moyens de traitement de l'air.

18. Système de renouvellement selon la revendication 16 ou la revendication 17, dans lequel la soufflante (35') est reliée à une entrée d'air auxiliaire (14') pour injecter de l'air à température ambiante atmosphérique.

## Claims

1. A walling element intended to be used in a building, comprising a composite plate (1) with at least one layer (2) in a thermal insulating material provided with crosspieces (3) on at least one of its sides, the crosspieces (3) defining an air passage (5) in at least two directions parallel to the plate (1) to allow air to enter the building, characterised in that the composite plate (1) also comprises at least one layer of hydrophilic resistant material (4) set against the crosspieces (3) of the layer of thermal insulating material, said hydrophilic material (4) forming a reservoir of humidity which absorbs humidity during humid periods and restores humidity when the incoming air is dry.

2. A walling element according to Claim 1, in which the hydrophilic resistant material is plaster.

3. A walling element according to one or the other of Claims 1 or 2, in which the layer (1) of hydrophilic resistant material is pierced by holes (6) all identical.

4. A walling element according to Claim 3, in which the holes (6) are blind and open onto the face of the layer (1) of hydrophilic resistant material (4) which is opposite to the layer of thermal insulating material (2).

5. A walling element according to any one of the preceding claims, in which the composite plate (1) comprises a layer of acoustic insulation resistant material.

6. Flooring of a building comprising a support walling (7) approximately horizontal, walling elements according to any one of Claims 1 to 5, set on the support walling (7) with their layer (1) of hydrophilic resistant material (4), or one of their layers (1) of hydrophilic resistant material (4) directed upwards, the air passages (5) of the different elements of the walling communicating together horizontally and being linked to an incoming air entry (12) from outside and to an air exit (13) towards the interior of the building, the means of heating (9) being set on the layer of hydrophilic resistant material (4) directed upwards and covered by a facing layer (8).

7. Flooring according to Claim 6 in which the facing layer is a coating (8) of cement or a self-levelling coat formed on top of the layer (1) of hydrophilic resistant material (4), an impermeable film set between the coating (8) and the layer of hydrophilic resistant material (4) in order to avoid any contact between the layer (1) of hydrophilic resistant material (4) and the coating (8), and the means of heating (9) are embedded in the coating (8).

8. Flooring according to Claim 6, in which the facing layer is a dry coating, the means of heating (9) being embedded in a bed of sand and the dry coating being set on the bed of sand.

9. A building facade comprising a support walling (10) approximately vertical, walling elements according to any one of Claims 1 to 5 fixed to the support walling (10), with their layer of hydrophilic resistant material (4) or one of their layers of hydrophilic resistant material (4) directed towards the exterior of the building and a facing layer (11) to isolate the layer of hydrophilic resistant material (4) from bad weather, the air passages (5) of the different walling elements being linked to an air entry (16) communicating with the outside atmosphere and with an air exit (13) towards the interior of the building.

10. A facade according to Claim 9, in which said support walling is set so as to be exposed to the sun during at least part of the day.

11. A system for air renewal comprising a facade according to Claim 10, an auxiliary air entry (14) to bring in air at ambient atmospheric temperature, said auxiliary air entry communicating directly with the outside atmosphere, the system for air renewal also comprising means (15) for communicating said air exit (13) selectively either with the air passages (5a) of the walling elements of said facade exposed to the sun, or with the auxiliary air entry (14).

12. A system for air renewal of a building, comprising at least one flooring and one ceiling each equipped with walling elements according to any one of Claims 1 to 5, in which the walling elements of the ceiling comprising air passages (5b) which communicate together horizontally as a whole and are linked to an air entry (16) which communicates with the outside of the building, the walling elements of the flooring comprising air passages (5c) which communicate together horizontally and communicate on the one hand with the air passages (5b) of the elements of the ceiling walling, and on the other hand with an air exit (13) towards the interior of the building.

13. A system of air renewal according to Claim 12, comprising a facade according to Claim 10 whose air passages (5a) communicate with the air passages (5b) of the walling elements of the ceiling, an auxiliary air entry (14) to bring in air at atmospheric ambient temperature, and also comprising means (34) for selective connection of the air passages (5c) of the walling elements of the flooring either to the auxiliary air entry (14) or to the air passages (5b) of the walling elements of the ceiling.

14. A system of air renewal of a building comprising at least one flooring or ceiling presenting walling elements according to any one of Claims 1 to 5, and also comprising a heat pump (21) to extract heat from the air exiting the building, the heat pump (21) receiving air coming into the building through air passages (5) of walling elements, the system of air renewal (21) also comprising selective means for either heating the air coming into the building by means of the heat pump or cooling the air coming into the building by means of the heat pump, or not acting on the air coming into the building by means of the heat pump.

15. A system of air renewal according to Claim 14, in which the heat pump (21) is also used to heat the water of a water-heater (22).

16. A system of air renewal of a building comprising at least one flooring or one ceiling presenting walling elements according any one of Claims 1 to 5, and also comprising a blower (35, 35') to inject air taken from outside the building into the air passages (5).

17. A system of air renewal according to Claim 16, in which the blower (35, 35') is coupled with means for treating the air.

18. A system of air renewal according to one or the other of Claims 16 or 17, in which the blower (35') is linked to an auxiliary air entry (14') to inject air at atmospheric ambient temperature.

## Patentansprüche

1. Wandelement, das zur Verwendung in einem Gebäude bestimmt ist und von einer zusammengesetzten Platte (1) gebildet wird, die zumindest eine Schicht (2) aus einem wärmeisolierenden Material aufweist, die auf wenigstens einer ihrer Flächen mit Distanzelementen (3) versehen ist, wobei die Distanzelemente (3) einen Luftdurchgang (5) in wenigstens einer der beiden zur Platte (1) parallelen Richtungen definieren, damit Luft in das Gebäude eintreten kann, dadurch gekennzeichnet, daß die zusammengesetzte Platte (1) weiterhin wenigstens eine Schicht aus einem widerstandsfähigen, hydrophilen Material (4) umfaßt, die an den Distanzelementen (3) der Schicht aus wärmeisolierendem Material anliegend angeordnet ist, wobei das hydrophile Material (4) ein Feuchtigkeitsreservoir bildet, das sich während feuchter Perioden mit Feuchtigkeit auflädt und diese Feuchtigkeit abgibt, wenn die eintretende Luft trocken ist.

2. Wandelement nach Anspruch 1, bei dem das widerstandsfähige hydrophile Material aus Gips besteht.

3. Wandelement nach Anspruch 1 oder 2, bei dem die Schicht (1) aus widerstandsfähigem hydrophilen Material Löcher (6) aufweist, die alle identisch sind.

4. Wandelement nach Anspruch 3, bei dem die Löcher (6) Vertiefungen sind, die auf der Seite der Schicht (1) aus widerstandsfähigem hydrophilen Material (4) offen sind, die der Schicht (2) aus wärmeisolierendem Material entgegengesetzt ist.

5. Wandelement nach einem der vorhergehenden Ansprüche, bei dem die zusammengesetzte Platte (1) eine Schicht aus einem elastischen schallisolierenden Material umfaßt.

6. Gebäudeboden, der eine im wesentlichen horizontale Tragwand (7) umfaßt, wobei Wandelemente nach einem der Ansprüche 1 bis 5 auf der Tragwand (7) mit ihrer Schicht (1) aus widerstandsfähigem hydrophilen Material (4) angeordnet oder mit einer ihrer Schichten (1) aus widerstandsfähigem hydrophilen Material (4) nach oben gerichtet angeordnet sind, wobei die Luftdurchgänge (5) der verschiedenen Wandelemente horizontal miteinander in Verbindung stehen und mit einem von außen kommenden Lufteintritt (12) und einem in das Innere des Gebäude mündenden Luftausgang (13) verbunden sind, wobei Heizeinrichtungen (9) auf der Schicht aus widerstandsfähigem hydrophilen Material (4), die nach oben gerichtet ist, angeordnet und durch eine Oberflächenschicht (8) abgedeckt sind.

7. Boden nach Anspruch 6, bei dem die Oberflächenschicht ein Überzug (8) aus Beton oder einem sich selbst glättenden Material ist, der über der Schicht (1) aus widerstandsfähigem hydrophilen Material (4) gebildet ist, wobei ein dichter Film zwischen dem Überzug (6) und der Schicht aus widerstandsfähigem hydrophilen Material (4) angeordnet ist, um jegliche Berührung zwischen der Schicht (1) aus widerstandsfähigem hydrophilen Material (4) und dem Überzug (8) zu vermeiden, wobei die Heizeinrichtungen (9) in den Überzug (8) eingebettet sind.

8. Boden nach Anspruch 6, bei dem die Oberflächenschicht ein trockener Überzug ist, wobei die Heizeinrichtungen (9) in ein Sandbett eingebettet sind und der trockene Überzug auf dem Sandbett angeordnet ist.

9. Gebäudefassade, die eine im wesentlichen senkrechte Tragwand (10) umfaßt, wobei Wandelemente nach einem der Ansprüche 1 bis 5 an der Tragwand (10) mit ihrer Schicht aus widerstandsfähigem, hydrophilen Material (4) oder so angeordnet sind, daß eine ihrer Schichten aus widerstandsfähigem hydrophilen Material (4) zur Außenseite des Gebäudes hin gerichtet sind, und mit einer Vorderflächenschicht (11) zum Isolieren der Schicht aus widerstandsfähigem hydrophilen Material (4) gegen Witterungseinflüsse, wobei die Luftdurchgänge (5) der verschiedenen Wandelemente mit einem Lufteintritt (16), der mit der Außenatmosphäre in Verbindung steht, und einem Luftausgang (13) in Verbindung stehen, der in das Innere des Gebäudes mündet.

10. Fassade nach Anspruch 9, bei der die Tragwand so angeordnet ist, daß sie zumindest während eines Teiles des Tages der Sonne ausgesetzt ist.

11. System zum Erneuern der Luft, das eine Fassade gemäß Anspruch 10 und einen Hilfs-Lufteintritt (14) umfaßt, um Luft mit der Temperatur der umgebenden Atmosphäre eintreten zu lassen, wobei der Hilfs-Lufteintritt direkt mit der Außenatmosphäre in Verbindung steht und das Lufterneuerungssystem weiterhin Mittel (15) umfaßt, die dazu dienen, den Luftausgang (13) wahlweise entweder mit den Luftdurchgängen (5a) der Wandelemente der der Sonne ausgesetzten Fassade oder mit dem Hilfs-Lufteintritt (14) zu verbinden.

12. System zur Erneuerung der Luft in einem Gebäude, das wenigstens einen Boden und eine Decke umfaßt, die jeweils mit Wandelementen gemäß einem der Ansprüche 1 bis 5 versehen sind, wobei die Wandelemente der Decke Luftdurchgänge (5b) umfassen, die miteinander in Verbindung stehen und mit einem Lufteintritt (16) verbunden sind, der mit der Außenseite des Gehäuses in Verbindung steht, und wobei die Wandelemente des Bodens Luftdurchgänge (5c) umfassen, die miteinander horizontal in Verbindung stehen und einerseits mit den Luftdurchgängen (5b) der Wandelemente der Decke und andererseits mit einem in das Innere des Gebäudes mündenden Luftausgang (13) in Verbindung stehen.

13. System zur Lufterneuerung nach Anspruch 12, das eine Fassade gemäß Anspruch 10 umfaßt, deren Luftdurchgänge (5a) mit den Luftdurchgängen (5b) der Wandelemente der Decke in Verbindung stehen, sowie einen Hilfs-Lufteintritt (14) zum Eintretenlassen von Luft mit der Temperatur der Umgebungsatmosphäre, und das weiterhin Mittel (34) umfaßt, um wahlweise die Luftdurchgänge (5c) der Wandelemente des Bodens entweder mit dem Hilfs-Lufteintritt (14) oder mit den Luftdurchgängen (5b) der Wandelemente der Decke zu verbinden.

14. System zur Erneuerung von Luft in einem Gebäude, das wenigstens einen Boden oder eine Decke umfaßt, der bzw. die Wandelemente gemäß einem der Ansprüche 1 bis 5 aufweist, und das weiterhin eine Wärmepumpe (21) besitzt, die dazu dient, der das Gebäude verlassenden Luft Wärme zu entziehen, wobei die Wärmepumpe (21) die in das Gebäude durch die Luftdurchgänge (5) der Wandelemente eintretende Luft empfängt, und wobei das System zur Erneuerung von Luft (21) weiterhin Mittel umfaßt, die dazu dienen wahlweise entweder die in das Gebäude eintretende Luft mit Hilfe der Wärmepumpe zu heizen oder die in das Gebäude eintretende Luft mit Hilfe der Wärmepumpe zu kühlen, oder mit der Wärmepumpe nicht auf die in das Gebäude eintretende Luft einzuwirken.

15. System zur Erneuerung der Luft nach Anspruch 14, bei dem die Wärmepumpe (21) im übrigen dazu verwendet wird, das Wasser in einem Boiler (22) zu heizen.

16. System zur Lufterneuerung in einem Gebäude, das wenigstens einen Boden oder eine Decke umfaßt, der bzw. die Wandelemente gemäß einem der Ansprüche 1 bis 5 umfaßt, und das weiterhin ein Gebläse (35, 35') umfaßt, um in die Luftdurchgänge (5) die außerhalb des Gebäudes vorhandene Luft hineinströmen zu lassen.

17. System zur Erneuerung der Luft nach Anspruch 16, bei dem das Gebläse (35, 35') mit Einrichtungen zum Behandeln der Luft gekoppelt ist.

18. Erneuerungssystem nach Anspruch 16 oder Anspruch 17, bei dem das Gebläse (35') mit einem Hilfs-Lufteintritt (14') verbunden ist, um Luft mit der Temperatur der umgebenden Atmosphäre hineinströmen zu lassen.
